# FASCICULE DE BREVET EUROPEEN

(11) **EP 0 373 008 B1**
(45) Date de publication et mention de la délivrance du brevet: **18.08.1993**
(21) Numéro de dépôt: 89402839.8
(22) Date de dépôt: 13.10.1989
(51) Int. Cl.: F16B 7/04, E06B 3/96

(54) **Pièce de liaison destinée à l'assemblage de profilés**
Verbindungsstück zur Montage von Profilen
Connecting device for the assembly of profiles

(30) Priorité: 20.10.1988 FR 8813769
(43) Date de publication de la demande: 13.06.1990
(73) Titulaire: MERLIN GERIN, F-38240 Meylan (FR)
(72) Inventeur: Betsch, Frédéric, F-67320 Bettwiller (FR)
(74) Mandataire: Lerner, François

(56) Documents cités:
- BE-A- 548 983
- CH-A- 403 207
- DE-A- 2 427 242
- FR-A- 1 061 428
- US-A- 1 926 798
- US-A- 3 437 362

## Description

L'invention se rapporte à un système de liaison destiné à l'assemblage de profilés creux, tels que des profilés à section rectangulaire sensiblement carrée, utilisés pour réaliser des bâtis d'armoires destinés à recevoir un appareillage électrique ou électronique.

Recourir à une pièce de jonction pour assembler entre eux, à l'une de leurs extrémités, divers profilés s'étendant dans plusieurs directions, est bien entendu largement connu.

Ainsi le document DE-A-2 427 242 divulgue une pièce de liaison destinée à l'assemblage de profilés creux, du type comprenant plusieurs branches réunies à une partie commune de jonction, les axes distincts de ces branches s'y intersectant selon un certain angle, chaque branche pouvant venir s'engager à l'intérieur de l'un des profilés et étant fendue à partir de son extrémité libre pour présenter au moins deux ailes élastiquement déformables en écartement relatif pour bloquer les profilés sous l'action d'éléments d'écartement disposés entre les ailes et sollicités en translation sensiblement parallèlement à l'axe de la branche considérée.

Dans un certain nombre de cas, et notamment dans ce même document allemand, on prévoit, pour solliciter les ailes de blocages des profilés, d'utiliser des vis d'appui venant agir sur les éléments d'écartement de la pièce de liaison.

Pour écarter les ailes, les vis sont serrées, entraînant alors entre ces ailes, lesdits éléments d'écartement, jusqu'à blocage des profilés, la manoeuvre inverse des vis en permettant bien entendu la libération.

L'un des inconvénients majeurs de ce mode d'assemblage, est qu'il faut prévoir, par pièce de liaison, au moins autant de vis qu'il y a de profilés à assembler, ce qui augmente les temps d'intervention et vient grever le prix de revient des armoires. En outre, compte tenu de la disposition non coaxiale des branches de la pièce et donc des profilés à assembler, les opérations de vissage ou de dévissage peuvent s'avérer malaisées par manque d'accessibilité.

L'invention a pour objet de résoudre ces difficultés en proposant une pièce de liaison autorisant l'assemblage de tous les profilés portés par la pièce au moyen de l'action combinée d'un organe de poussée unique et d'un système de renvoi et de répartition des efforts.

Plus précisément, la pièce de liaison de l'invention se caractérise en ce que les différents éléments d'écartement sont sollicités en translation par l'intermédiaire d'un organe de poussée unique monté à travers une paroi de la partie de jonction pour exercer un effort axial sur un organe intermédiaire librement monté à l'intérieur de cette même partie de jonction pour répartir l'effort qu'il subit entre les différents éléments d'écartement qui viennent à son contact.

Ainsi, une simple action sur le moyen unique de sollicitation (lequel pourra par exemple être constitué par une vis) permettra de provoquer l'écartement ou le rapprochement des ailes ou mâchoires de chaque branche de la pièce, assurant ainsi de façon particulièrement rapide et aisée le blocage ou la libération des profilés correspondants.

Il est à noter que l'on connaît déjà des systèmes de blocage de profilés n'utilisant qu'un seul organe de poussée, comme divulgué notamment au brevet US-A-3 437 362. Mais les branches de la pièce de liaison s'étendent alors coaxialement, la pièce formant ainsi une barre rectiligne pour un assemblage coaxial des profilés. Lorsque ces profilés doivent être associés suivant des directions distinctes s'intersectant, un profilé intermédiaire par exemple en té (T) doit alors être rajouté, nécessitant la présence de plusieurs pièces rectilignes de liaison avec chacune un organe de poussée, ce qui ne résoud aucunement le problème de l'invention.

Outre la pièce de liaison à organe de poussée unique, on notera encore que l'invention concerne un ensemble comprenant une telle pièce dont chacune des branches peut être engagée à l'intérieur de l'un desdits profilés creux, des orifices étant ménagés dans certains au moins de ces profilés et au moins un passage étant prévu à travers l'une au moins des ailes de chaque branche de la pièce de liaison, de telle manière que ce(s) passage(s) et ces orifices soient formés suivant un axe transversal par rapport à celui de la branche considérée et que chaque passage puisse recevoir un coulisseau propre à s'engager dans l'un desdits orifices correspondant des profilés, sous la poussée des éléments d'écartement.

Selon une caractéristique complémentaire, chacun de ces coulisseaux sera de préférence pourvu d'une face dirigée vers la partie de jonction de la pièce de liaison, laquelle face sera avantageusement chanfreinée à son extrémité libre par laquelle le coulisseau pénètre dans l'orifice correspondant du profilé, de façon à exercer sur ce dernier, et toujours sous l'action des moyens d'écartement, un effort tendant à provoquer l'appui de l'une des extrémités dudit profilé contre un épaulement que présente la partie de jonction précitée.

Ainsi monté, chaque coulisseau permettra une action "à double effet" sur les profilés, induisant d'une part un mouvement de translation tendant à déplacer chaque profilé en direction de la pièce de liaison, en favorisant l'étanchéité au niveau de leur extrémité de jonction et, d'autre part, un blocage de ces mêmes profilés sur la branche considérée de la pièce de liaison.

Une description plus détaillée de l'invention va maintenant être donnée en référence aux dessins d'accompagnement proposés uniquement à titre d'exemple et dans lesquels :
- la figure 1 est une vue générale en perspective avec arrachement de la pièce de liaison de l'invention,
- les figures 2 et 3 sont des vues en coupe dans le plan II-II de la figure 1, respectivement en position rétractée non active des moyens de blocage (permettant la mise en place ou le retrait des profilés) et en position sortie active de ces mêmes moyens (assurant alors le blocage en position des profilés),
- la figure 4 est une vue en coupe dans le plan IV-IV de la figure 2,
- la figure 5 est une vue en coupe médiane de l'organe de poussée par lequel sont imprimés les efforts appliqués aux profilés,
- et, la figure 6 illustre une variante de réalisation de la pièce selon une vue en coupe correspondant à celle de la figure 3.

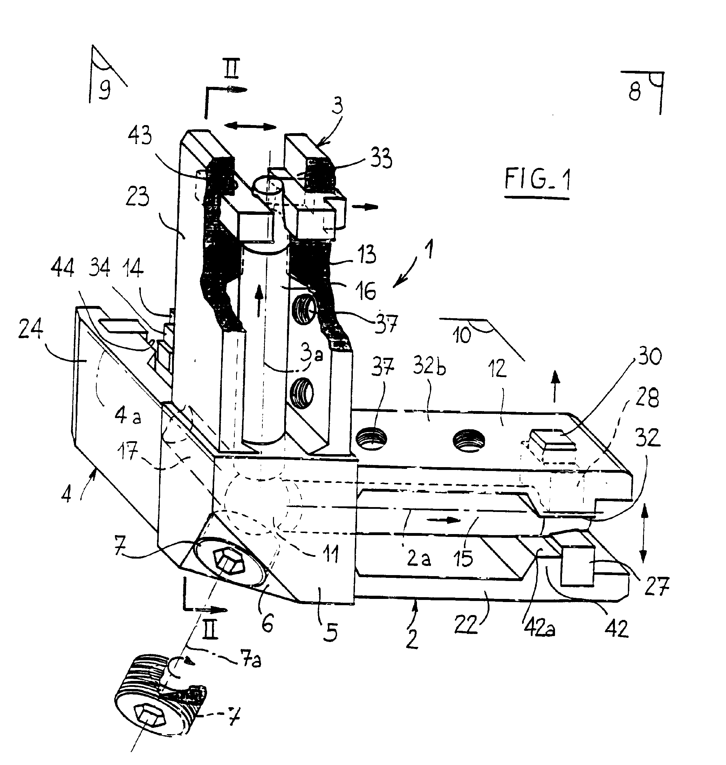

Si l'on se reporte tout d'abord à la figure 1, on voit illustrée une pièce de liaison 1 conforme à l'invention qui se présente en l'espèce sous la forme d'un trièdre à trois branches 2, 3, 4 d'axes respectifs 2a, 3a, et 4a deux à deux orthogonaux.

Telle qu'illustrée, chaque branche est fendue à partir de son extrémité libre et comprend deux ailes 12, 22 ; 13, 23 ; 14, 24 élastiquement déformables présentant deux mâchoires, respectivement 32, 42 ; 33, 43 ; 34, 44 faisant localement légèrement saillie de la face intérieure des ailes dirigée vers la fente (face repérée 42a pour la mâchoire 42 de la figure 1).

Les trois branches s'étendent, du côté opposé à leur extrémité libre, à partir d'un bloc formant partie de jonction 5 dans une paroi inclinée 6 de laquelle est ménagé un orifice taraudé propre à recevoir un organe de poussée constitué en l'espèce par une vis 7 sans tête.

Pour une bonne efficacité de la vis 7, compte tenu de la direction d'extension des branches, l'axe de pénétration 7a de cette vis sera de préférence dirigé sensiblement suivant l'axe de symétrie des directions 2a, 3a, 4a dans lesquelles s'étendent les différentes branches.

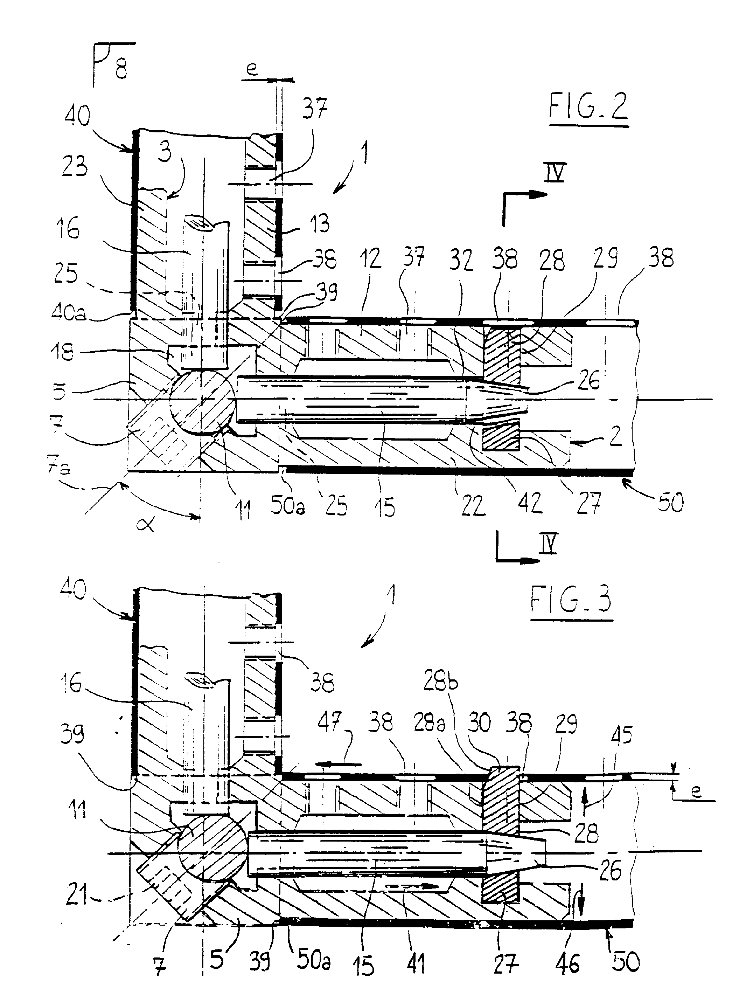

En d'autres termes, en projection dans les trois plans orthogonaux 8, 9, 10 contenant chacun l'un des axes de deux des trois branches de la pièce, la direction d'engagement et d'action de la vis 7 formera un angle α d'environ 45° par rapport à chaque axe de branche considéré (voir figure 2, plan 8).

Pour compléter le mécanisme, la pièce 1 comprend encore un organe 11, telle qu'une bille d'acier, contre laquelle vient agir la vis 7 et dont le rôle est de répartir l'effort exercé par la vis entre plusieurs éléments de transmission constitués en l'espèce par trois tiges 15, 16, 17, lesquelles s'étendent entre les deux ailes de chacune des branches 2, 3, 4 et sont mobiles en translation sensiblement parallèlement à la direction (2a, 3a, 4a) dans laquelle s'étend chacune de ces branches.

Comme on le voit plus clairement sur la figure 2, la bille 11 est logée dans une cavité 18 intérieure à la partie de jonction 5, de manière à pouvoir s'y déplacer librement, en particulier dans l'axe 7a suivant lequel agit la vis 7.

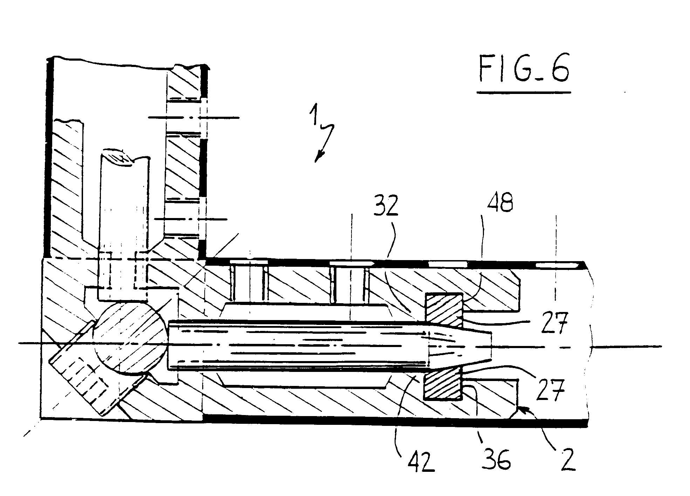

Figure 5, on remarquera que pour un meilleur guidage axial de la bille 11, la vis 7 comportera avantageusement une cuvette 19. Cette cuvette, par exemple hémisphérique, sera dimensionnée pour recevoir une partie de la bille. Elle sera formée sur la face de la vis opposée à celle 20 où est ménagé l'orifice multipans 21 dans lequel on peut introduire une clé de manoeuvre (par exemple une clé ALEN) propre à commander le vissage ou le dévissage de la vis 7.

Revenant à nouveau aux figures 1 et 2, on notera encore qu'à l'intérieur de la cavité 18, la bille 11 vient en contact avec l'une des extrémités de chacune des tiges 15, 16, 17 qui convergent vers elles, lesquelles tiges débouchent entre les ailes des branches, après avoir traversé chacune un orifice 25 qui assure la communication entre la partie interne des branches et la cavité 18.

A leur extrémité opposée, les tiges se terminent par une partie effilée 26 pouvant être conformée en tronc de cône avec deux méplats d'appui.

Telle qu'illustrée, la partie effilée de chaque tige est en contact de deux pièces, une pièce d'appui 27 associée étroitement à l'une des mâchoires de la branche considérée (mâchoire 42 de la figure 2) et un coulisseau 28 monté coulissant dans un passage 29 ménagé dans l'autre mâchoire (mâchoire 32 de la figure 2) selon une direction dirigée transversalement (notamment perpendiculairement) à l'axe de la branche considérée. Du côté de leur liaison avec la partie effilée des tiges, les pièces 27 et 28 présentent des parois à pente convenablement inclinée sensiblement complémentaire de celle des méplats d'appui de chaque tige 15, 16, ou 17.

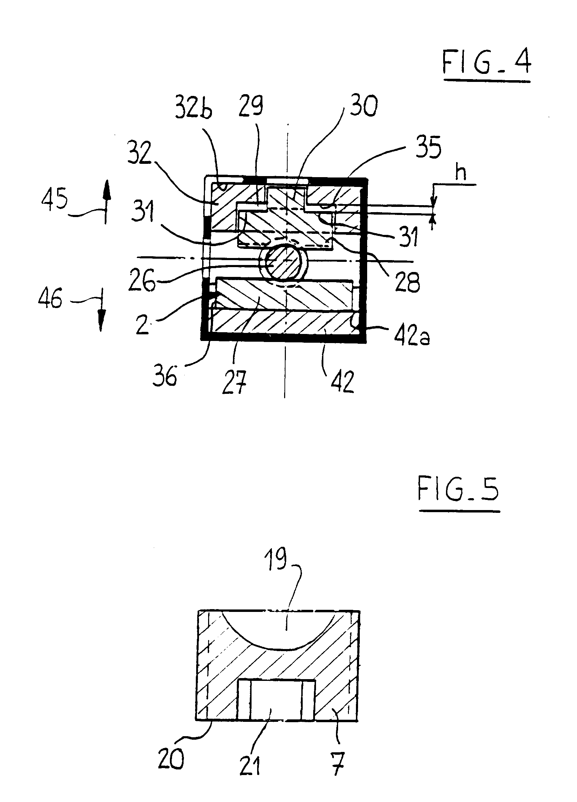

En pratique et comme on le voit plus clairement à la figure 4, les différents coulisseaux 28 seront montés avec un jeu h dans la direction transversale des passages 29 qui les reçoivent et comprendront chacun une protubérance ou un téton 30 faisant saillie, une fois monté sur la pièce, en direction de la face extérieure de la mâchoire considérée (face extérieure repérée 32b aux figures 1 et 4), et ce à partir d'un double épaulement 31 par lequel le coulisseau pourra prendre appui sur un épaulement double coopérant 35 par lequel le passage 29 se rétrécit avant de s'ouvrir sur la face extérieure précitée de la mâchoire considérée. Vers l'extrémité libre du téton 30, chaque coulisseau présente sur sa face 28a dirigée vers la partie de jonction 5, une partie chanfreinée formant une paroi inclinée 28b (figure 3) dont on comprendra l'utilité ci-après.

Quant aux pièces d'appui 27, elles seront de préférence chacune reçues étroitement dans une lumière 36 ménagée dans la face intérieure (telle que 42a) de l'autre mâchoire (repérée 42 à la figure 4 par exemple).

Eventuellement, des orifices taraudés complémentaires repérés 37 aux figures 1 et 2, pourront être prévus le long de chacune des branches 2, 3, 4 de la pièce, à travers l'une des ailes correspondantes, par exemple celle dont la mâchoire reçoit le coulisseau 28.

En référence aux figures 2 et 3, on va maintenant présenter le mode de fonctionnement de la pièce de liaison qui vient d'être décrite.

Figure 2, on a représenté en coupe et en vue partielle deux des trois branches de la pièce.

Comme on le voit, ces deux branches 2, 3 sont engagées à l'intérieur de profilés creux 40, 50 dont on veut assurer l'assemblage (bien entendu, la troisième branche 4 de la pièce peut également de la même façon venir elle-même s'engager à l'intérieur d'un troisième profilé à réunir aux deux précédents).

On comprendra que les profilés et les branches de la pièce de liaison auront des sections correspondantes de manière à assurer le meilleur engagement et le meilleur maintient possible. Le cas d'une section carrée a été retenu dans l'exemple illustré.

Comme représenté figure 2, chaque profilé est pourvu d'orifices débouchants 38 et les profilés sont chacun engagés autour des branches de la pièce de liaison de manière que l'un de leurs orifices 38 vienne sensiblement en regard du passage 29 de la mâchoire correspondante où est logé un coulisseau 28.

A la figure 2, la vis de poussée 7 est en position "dévissée". Elle n'exerce donc aucune force particulière sur la bille 11. En conséquence, les mâchoires ne sont alors pas sollicitées en écartement et les coulisseaux 28 sont en position rétractée, à l'intérieur de leur passage 29.

On remarquera que les profilés 40, 50 sont alors engagés autour des branches de la pièce de manière que leur extrémité d'engagement, respectivement 40a, 50a, vienne à proximité immédiate d'un épaulement 39 que présente la partie de jonction 5 de la pièce de liaison 1 en direction des différentes branches qui la constituent. En pratique, la largeur de chacun des épaulements 39 correspondra sensiblement à l'épaisseur e des profilés.

Reportons-nous maintenant à la figure 3 pour voir la pièce de liaison 1 dans sa position active, position dans laquelle elle assure l'assemblage étanche des profilés entre eux par blocage de chaque profilé sur la branche correspondante de la pièce.

Pour arriver à cette position, il a suffi de venir agir sur la vis 7 pour la serrer, de telle sorte que, prenant appui sur les filets de son orifice de réception, elle soit venue exercer une poussée sur la bille 7, laquelle a réparti l'effort entre les différentes tiges, provoquant leur déplacement dans l'axe des branches.

Pour bien comprendre le mode de transmission de l'effort qui conduit au blocage des profilés, considérons maintenant plus particulièrement la seule tige 15.

Sous l'action de la bille 11, cette tige se déplace donc dans le sens de la flèche 41 et vient, par son extrémité effilée 26 écarter l'un de l'autre, le coulisseau 28 et la pièce de poussée 27 dans la direction des flèches 45 et 46. Dans un premier temps, sous l'action de la tige 15, le coulisseau 28 est tout d'abord entraîné en translation dans son passage 29, ceci jusqu'à ce que le jeu h dont il dispose à l'intérieur du passage soit rattrapé. Au fur et à mesure que ce jeu h se réduit, le téton 30 du coulisseau débouche de son passage 29 pour s'engager dans l'orifice en regard 38 du profilé, sa partie chanfreinée 28b sollicitant progressivement le déplacement en translation de ce même profilé dans la direction de la flèche 47 jusqu'à ce que l'extrémité d'engagement 50a du profilé vienne en contact étroit avec l'épaulement correspondant 39 de la partie de jonction 5 de la pièce.

Pendant ce temps, une action similaire s'est bien entendu déroulée au niveau de chacune des branches de la pièce et, comme on le voit à la figure 3, l'extrémité d'engagement de chaque profilé est maintenant appliquée étroitement contre l'épaulement 39 correspondant.

Le serrage de la vis 7 se poursuivant, dès que le jeu h accordé aux coulisseaux 28 a été rattrapé, chacun d'eux vient par son épaulement 31 prendre appui sur l'épaulement coopérant 35 de la mâchoire correspondante et provoquer par réaction l'écartement des deux mâchoires de chacune des branches, comme représenté par les fléches 45 et 46 en ce qui concerne la branche 2. (figure 4)

Bien entendu, on aura compris que pour libérer les profilés, il suffira de desserrer la vis 7 jusqu'à ce que les tiges de transmission de l'effort ne sollicitent plus en écartement les mâchoires des branches, lesquelles reviendront alors élastiquement dans leur position non sollicitée, les coulisseaux 28 étant alors en position rétractée avec leur téton 30 rentré à l'intérieur de leur passage 29 de réception.

Il est clair que l'invention ne se limite pas strictement au mode de réalisation qui vient d'être décrit.

En particulier, on aurait pu prévoir d'utiliser une pièce d'appui 27 au lieu du coulisseau 28, et ce éventuellement sur chacune des branches de la pièce (variante représentée à la figure 6 où l'on voit donc que les deux mâchoires 32, 42 de la branche 2 reçoivent chacune dans un logement, respectivement 36 et 48, la pièce d'appui 27). Dans ce cas, le maintien des profilés serait donc assuré exclusivement par serrage, du fait de l'écartement des mâchoires correspondantes.

Egalement, d'autres moyens de poussée et de répartition de l'effort correspondant pourraient être envisagés, tel par exemple qu'un système à came permettant d'exercer un effort (en prenant appui sur une paroi de la partie 5 de jonction) et de le renvoyer vers les différentes tiges 15-16-17 de transmission (variante non représentée).

On notera également que la pièce de liaison de l'invention pourrait être conformée autrement qu'en trièdre à branches deux à deux orthogonales. Une pièce à deux branches serait par exemple tout à fait envisageable. L'aspect d'une telle pièce correspondrait alors aux représentations des figures 2, 3 ou 6. On pourrait également prévoir que l'écart angulaire entre les branches de la pièce soit supérieur ou inférieur à 90°. Il s'agit là d'une simple question de choix.

## Revendications

1. Pièce de liaison destinée à l'assemblage de profilés creux, du type comprenant plusieurs branches (2, 3, 4) réunies à une partie (5) commune de jonction,les axes distincts (2a, 3a, 4a) de ces branches s'y intersectant selon un certain angle, chaque branche pouvant venir s'engager à l'intérieur de l'un des profilés et étant fendue à partir de son extrémité libre pour présenter au moins deux ailes (12, 22 ; 13, 23 ; 14, 24) élastiquement déformables en écartement relatif pour bloquer les profilés sous l'action d'éléments d'écartement (15, 16, 17) disposés entre les ailes et sollicités en translation sensiblement parallèlement à l'axe de la branche considérée, ladite pièce étant caractérisée en ce que les différents éléments d'écartement (15, 16, 17) sont sollicités en translation par l'intermédiaire d'un organe (7) de poussée unique monté à travers une paroi (6) de la partie (5) de jonction pour exercer un effort axial sur un organe intermédiaire (11) librement monté à l'intérieur de cette même partie de jonction pour répartir l'effort qu'il subit entre les différents éléments d'écartement (15, 16, 17) qui viennent à son contact.

2. Pièce de liaison selon la revendication 1 caractérisée en ce que les éléments d'écartement (15, 16, 17) se terminent, du côté opposé à celui venant au contact de l'organe (11) intermédiaire, par une partie (26) effilée, laquelle agit sur les ailes de la branche (2, 3, 4) correspondante par l'intermédiaire d'au moins une pièce (27) d'appui portée par l'une au moins desdites ailes et présentant une paroi inclinée en correspondance de celle de ladite partie effilée (26).

3. Pièce de liaison selon l'une quelconque des revendications précédentes caractérisée en qu'elle comprend trois branches (2, 3, 4) formant un trièdre à axes (2a, 3a, 4a) deux à deux orthogonaux.

4. Pièce de liaison selon l'une quelconque des revendications précédentes caractérisée en ce que l'organe (7) de poussée agit sur l'organe (11) intermédiaire de répartition de l'effort, sensiblement suivant l'axe (7a) de symétrie desdits axes (2a, 3a, 4a) suivant lesquels s'étendent les branches (2, 3, 4) de la pièce.

5. Pièce de liaison selon l'une quelconque des revendications précédentes caractérisée en ce que l'organe (11) intermédiaire de répartition de l'effort se présente sous la forme d'une bille qui est logée avec jeu dans une cavité intérieure (18) de la partie (5) de jonction de la pièce de liaison, cette bille venant au contact des différentes éléments (15, 16, 17) d'écartement qui convergent vers elle.

6. Pièce de liaison selon la revendication 5 caractérisée en ce que l'organe (7) de poussée se présente sous la forme d'une vis de pression vissée sur la partie de jonction (5) et présentant une cuvette (19) prévue pour recevoir partiellement ladite bille (11).

7. Pièce de liaison selon l'une quelconque des revendications précédentes caractérisée en ce que les éléments (15, 16, 17) d'écartement se présentent chacun sous la forme d'une tige dont l'extrémité opposée à celle dirigée vers l'organe (11) intermédiaire de transmission est conformée sensiblement en tronc de cône.

8. Ensemble comprenant la pièce de liaison selon l'une quelconque des revendications précédentes dont chacune des branches (2, 3, 4) est engagée à l'intérieur d'un profilé creux (40, 50), caractérisé en ce que des orifices (38) sont ménagés dans certains au moins desdits profilés et au moins un passage (37) est prévu au travers de l'une au moins des ailes de chaque branche (2, 3, 4) de la pièce de liaison, ce(s) passage(s) et ces orifices étant ménagés suivant un axe transversal par rapport à celui de la branche considérée et chaque passage (37) recevant un coulisseau (28) propre à s'engager dans l'un desdits orifices (38) correspondant des profilés, sous la poussée des éléments (15, 16, 17) d'écartement.

9. Ensemble selon la revendication 8 caractérisé en ce que chaque coulisseau (28) est monté avec un certain jeu dans l'axe du passage (37) qui le reçoit, et comprend une protubérance, ou un téton, (30) faisant saillie en direction de l'orifice (38) correspondant du profilé, à partir d'un épaulement (31) par lequel le coulisseau (28) prend appui sur un épaulement coopérant (35) dudit passage, sous l'action des moyens (15, 16, 17) d'écartement.

10. Ensemble selon la revendication 8 ou la revendication 9 caractérisé en ce que chaque coulisseau (28) comprend une face (28a) qui est dirigée vers la partie (5) de jonction de la pièce de liaison et qui est chanfreinée à son extrémité libre (28b) par laquelle le coulisseau pénètre dans l'orifice (38) correspondant du profilé, de façon à exercer sur ce dernier et sous l'action des moyens (15, 16, 17) d'écartement, un effort tendant à provoquer l'appui de l'une des extrémités (40a, 50a) dudit profilé (40, 50) contre un épaulement (39) que présente la partie (5) de jonction.

## Patentansprüche

1. Verbindungsstück zum Zusammenfügen von Hohlprofilen, umfassend mehrere Arme (2, 3, 4), die in einem gemeinsamen Verbindungsteil (5) vereinigt sind, wobei die verschiedenen Achsen (2a, 3a, 4a) dieser Arme sich dort unter einem bestimmten Winkel schneiden, und wobei jeder Arm in das Innere eines der Profile eingreifen kann sowie, ausgehend von seinem freien Ende, längsgeteilt ist und so mindestens zwei im Abstand zueinander elastisch verformbare Schenkel (12, 22; 13, 23; 14, 24) bildet, um die Profile unter der Wirkung von Abstandselementen (15, 16, 17) zu arretieren, die zwischen den Schenkeln angeordnet und im wesentlichen parallel zur Achse des betreffenden Schenkels schubbeaufschlagbar sind, wobei dieses Stück dadurch gekennzeichnet ist, daß die verschiedenen Abstandselemente (15, 16, 17) mittels eines gemeinsamen Schubelements (7) schubbeaufschlagbar sind, das durch eine Wand (6) des Verbindungsteils (5) hindurch angebracht ist und eine Axialbelastung auf ein frei im Inneren desselben angebrachtes Zwischenteil (11) ausübt, um die Belastung, mit der es beaufschlagt wird, auf die verschiedenen, damit in Eingriff stehenden Abstandselemente (15, 16, 17) zu verteilen.

2. Verbindungsstück nach Anspruch 1, dadurch gekennzeichnet, daß die Abstandselemente (15, 16, 17) auf der Seite, die der in Eingriff mit dem Zwischenteil (11) gelangenden entgegengesetzt ist, in einem konisch zulaufenden Teil (26) enden, das auf die Schenkel des entsprechenden Arms (2, 3, 4) mittels mindestens eines Stützteils (27) einwirkt, das von wenigstens einem besagter Schenkel getragen ist und eine geneigte Wand in Übereinstimmung mit der des konisch zulaufenden Teils (26) aufweist.

3. Verbindungsstück nach einem der vorhergehenden Ansprüche, dadurch gekennzeichnet, daß es drei Arme (2, 3, 4) umfaßt, die ein Trieder mit jeweils paarweise orthogonalen Achsen (2a, 3a, 4a) bilden.

4. Verbindungsstück nach einem der vorhergehenden Ansprüche, dadurch gekennzeichnet, daß das Schubelement (7) auf das Zwischenteil (11) zur Belastungsverteilung im wesentlichen entsprechend der Symmetrieachse (7a) besagter Achsen (2a, 3a, 4a) einwirkt, entsprechend denen sich die Arme (2, 3, 4) des Stücks erstrecken.

5. Verbindungsstück nach einem der vorhergehenden Ansprüche, dadurch gekennzeichnet, daß das Zwischenteil (11) zur Beaufschlagungsverteilung nach Art einer Kugel ausgebildet ist, die mit Spiel in einer inneren Ausnehmung (18) des Verbindungsteils (5) des Verbindungsstückes untergebracht ist, wobei diese Kugel mit den verschiedenen Abstandselementen (15, 16, 17), die gegen sie zusammenlaufen, in Eingriff tritt.

6. Verbindungsstück nach Anspruch 5, dadurch gekennzeichnet, daß das Schubelement (7) nach Art einer Druckschraube ausgebildet ist, die auf das Verbindungsteil (5) geschraubt ist und eine Mulde (19) bildet, die zur teilweisen Aufnahme besagter Kugel (11) vorgesehen ist.

7. Verbindungsstück nach einem der vorgehenden Ansprüche, dadurch gekennzeichnet, daß die Abstandselemente (15, 16, 17) jeweils nach Art einer Stange ausgebildet sind, deren dem gegen das Übertragungszwischenteil (11) gerichteten Ende entgegengesetztes Ende im wesentlichen einem Kegelstumpf entspricht.

8. Anordnung umfassend das Verbindungsstück nach einem der vorhergehenden Ansprüche, wobei jeder der Arme (2, 3, 4) in das Innere eines Hohlprofils (40, 50) eingreift, dadurch gekennzeichnet, daß wenigstens in bestimmten der Profile Öffnungen (38) angebracht sind und mindestens ein Durchgang (37) durch wenigstens einen der Schenkel jedes Arms (2, 3, 4) des Verbindungsstücks vorgesehen ist, wobei dieser Durchgang (diese Durchgänge) und diese Öffnungen entsprechend einer in bezug auf die des betreffenden Arms querverlaufenden Achse angeordnet sind und jeder Durchgang (37) ein Gleitstück (28) aufnimmt, das geeignet ist, in eine der entsprechenden Öffnungen (38) der Profile unter der Schubwirkung der Abstandselemente (15, 16, 17) einzugreifen.

9. Anordnung nach Anspruch 8, dadurch gekennzeichnet, daß jedes Gleitstück (28) mit einem gewissen Spiel in der Achse des es aufnehmenden Durchgangs (37) angebracht ist und eine Erhebung oder einen Ansatz (30) umfaßt, die in Richtung der entsprechenden Öffnung (38) des Profils vorspringen, ausgehend von einer Schulter (31), durch die das Gleitstück (28) sich auf einer damit zusammenwirkenden Schulter (35) des Durchgangs unter der Wirkung der Abstandsmittel (15, 16, 17) abstützt.

10. Anordnung nach Anspruch 8 oder 9, dadurch gekennzeichnet, daß jedes Gleitstück (28) eine Fläche (28a) umfaßt, die gegen das Verbindungsteil (5) des Verbindungsstückes gerichtet ist und die an ihrem freien Ende (28b), mit dem das Gleitstück in die entsprechende Ausnehmung (38) des Profils eintritt, angefast ist, derart, daß sie auf letzteres und unter Wirkung der Abstandsmittel (15, 16, 17) eine Beaufschlagung ausübt, die darauf gerichtet ist, das Abstützen eines der Enden (40a, 50a) des Profils (40, 50) gegen eine an dem Verbindungsteil (5) gebildetete Schulter (39) zu bewirken.

## Claims

1. Connection piece for assembling hollow profiled sections, of the type which comprises a plurality of legs (2,3,4) connected to a common joining part (5), the various axes (2a, 3a, 4a) of these legs intersecting at a given angle, each leg being able to engage inside one of the profiled sections and being split at its free end in order to form at least two resiliently deformable wings (12, 22; 13, 23; 14, 24) spaced from one another such that the profiled sections are locked by means of the action of distancing components (15, 16, 17) which are disposed between the wings and are subjected to translation stress substantially parallel to the axis of the leg in question, the said part being characterised in that the various distancing components (15, 16, 17) are subjected to translation stress by means of a single thrust unit (7) disposed in a wall (6) of the joining part (5) in order to exert axial force on an intermediate unit (11) freely mounted inside this joining part so as to distribute the force it sustains between the various distancing components (15, 16, 17) which come into contact therewith.

2. Connection piece according to Claim 1, characterised in that the distancing components (15, 16, 17) end on the side opposite that which comes into contact with the intermediate unit (11) in a tapered part (26) which acts on the wings of the corresponding leg (2, 3, 4) by means of at least one support part (27) which is carried on at least one of the said wings and which has an inclined wall corresponding to that of the said tapered part (26).

3. Connection piece according to either of the preceding Claims, characterised in that it comprises three legs (2, 3, 4) which form a trihedron with axes (2a, 3a, 4a) which in pairs are at rights angles to one another.

4. Connection piece according to any one of the preceding Claims, characterised in that the thrust unit (7) acts on the intermediate unit (11) for distributing the force, substantially along the axis of symmetry (7a) of the said axes (2a, 3a, 4a), along which the legs (2, 3, 4) of the piece extend.

5. Connection piece according to any one of the preceding Claims, characterised in that the intermediate unit (11) for distributing the force is in the form of a ball which is accommodated with play in an inner recess (18) of the joining part (5) of the connection piece, this ball coming into contact with the various distancing components (15, 16, 17) which converge towards it.

6. Connection piece according to Claim 5, characterised in that the thrust unit (7) is in the form of a pressure screw which is screwed onto the joining part (5) and which has a dish (19) provided in order to accommodate partially the said ball (11).

7. Connection piece according to any one of the preceding Claims, characterised in that the distancing components (15, 16, 17) are each in the form of a rod, of which the end opposite that facing the intermediate drive unit (11) is substantially frusto-conical.

8. Assembly comprising the connection piece according to any one of the preceding Claims, of which each of the legs (2, 3, 4) is engaged inside a hollow profile (40, 50), characterised in that apertures (38) are provided in at least some of the said profiled sections and at least one passage (37) is provided through at least one of the wings of each leg (2, 3, 4) of the connection piece, this passage/ these passages and these apertures being provided in an axis transverse relative to the leg in question, and each passage (37) accommodating a slide (28) which can engage in one of the said corresponding apertures (38) of the profiled sections, under the thrust of the distancing components (15, 16, 17).

9. Assembly according to Claim 8, characterised in that each slide (28) is mounted with a given amount of play in the axis of the passage (37) in which it is accommodated, and comprises a projection or lug (30) which projects in the direction of the corresponding aperture (38) of the profiled section, from a shoulder (31) by means of which the slide (28) is supported on a cooperating shoulder (35) of the said passage, under the action of the distancing means (15, 16, 17).

10. Assembly according to Claim 8 or Claim 9, characterised in that each slide (28) comprises a surface (28a) which faces the joining part (5) of the connection piece and is bevelled at its free end (28b) by means of which the slide penetrates the corresponding aperture (38) of the profiled section, such that force is exerted on the latter and under the effect of the distancing means (15, 16, 17), in order to support one of the ends (40a, 50a) of the said profiled section (40, 50) against a shoulder (39) on the joining part (5).
